Europäisches Patentamt

European Patent Office

Office européen des brevets

(19)

(11) Veröffentlichungsnummer : **0 118 522**
**B1**

(12) **EUROPÄISCHE PATENTSCHRIFT**

(45) Veröffentlichungstag der Patentschrift :
29.07.87

(51) Int. Cl.⁴ : **H 04 B   3/04**

(21) Anmeldenummer : **83902899.0**

(22) Anmeldetag : **07.09.83**

(86) Internationale Anmeldenummer :
**PCT/HU 83/00047**

(87) Internationale Veröffentlichungsnummer :
**WO/8401067 (15.03.84 Gazette 84/07)**

(54) **VERFAHREN ZUR INBETRIEBHALTUNG KOAXIALER MEHRKANALANLAGEN ÜBER MIT SYMMETRISCHEM KABEL AUSGESTALTETES FERNGESPEISTES ÜBERTRAGUNGSNETZ UND ÜBERTRAGUNGSKETTE ZUR REALISIERUNG DES VERFAHRENS.**

(30) Priorität : **08.09.82 HU 286182**

(43) Veröffentlichungstag der Anmeldung :
**19.09.84 Patentblatt 84/38**

(45) Bekanntmachung des Hinweises auf die Patenterteilung : **29.07.87 Patentblatt 87/31**

(84) Benannte Vertragsstaaten :
**AT DE FR GB SE**

(56) Entgegenhaltungen :
DE-B- 2 244 760
DE-B- 2 831 982
FR-A- 2 094 582
FR-A- 2 128 152
US-A- 3 993 952
US-A- 4 061 970
RADIO MENTOR ELECTRONIC, Nr. 7, Juli 1973, Seiten 292-294, München, DE; H. SCHMIDT: "Ein Pilotsignal reicht"
CABLES ET TRANSMISSION, Band 29, Nr. 2, 1975, Seiten 177-193, Paris, FR; C. SAVOYE: "Amplificateur de ligne à trois transistors pour système à 12 MHz"
I.I.Grodnew et al. "Kabelnye linii swjasi", 1960 (Moskau), pages 253-259
R.I.A. Abolitz "Mnogokanalnaja swjas", 1971, "Swjas", (Moskau), s. 243-248

(73) Patentinhaber : **TELEFONGYAR**
**P.O. Box 16**
**H-1956 Budapest (HU)**

(72) Erfinder : **PAL, Gaszton**
**Attila u. 119**
**H-Budapest I (HU)**
Erfinder : **CEBE, Lászlò**
**Kelen J. u. 17**
**H-Budapest XIV (HU)**
Erfinder : **MATUSIK, Ferenc**
**Bartòk B. u. 60**
**H-Budapest XI (HU)**
Erfinder : **SZALAI, Tibor**
**Lövölde tér 2**
**H-Budapest VII (HU)**

(74) Vertreter : **Patentanwälte Viering & Jentschura**
**Steinsdorfstrasse 6**
**D-8000 München 22 (DE)**

**0 118 522**

**Beschreibung**

Die Erfindung betrifft ein Verfahren zur Inbetriebhaltung koaxialer Mehrkanalanlagen über ein mit symmetrischem Kabel ausgestaltetes ferngespeistes Übertragungsnetz. Das Verfahren ermöglicht durch die neuartige Durchführung der Korrektionskompensation, daß bereits vorhandene, mit symmetrischem Kabel ausgestaltete Übertragungsnetze auch entlang eines längeren Hauptkabelnetzwerkes unter geeigneten Bedingungen zur Inbetriebhaltung von koaxialen Mehrkanalanlagen verwendet werden können.

Desweiteren bezieht sich die Erfindung auf eine mehrkanalige Nachrichtenübertragungskette, deren Verstärkungsstationen für das Hauptkabelnetzwerk in einer zur Realisierung des erfindungsgemässen Verfahrens geeigneten Weise ausgestaltet sind.

In der Telekommunikation erhöht sich der Bedarf an Kanälen seit langem stetig, weswegen man sich seit langem mit der Lösung des Problems beschäftigt, daß koaxiale Mehrkanalanlagen auch mit Hilfe von früher verlegten und mit symmetrischem Kabel versehenen Netzen betrieben werden können.

Aus dem Stand der Technik sind die zu diesem Zweck entwickelten sogenannten N + N Systeme bekannt, die in Übertragungsketten sowohl mit koaxialem wie auch mit symmetrischem Kabel betrieben werden. Solche Systeme werden z. B. in dem « Handbuch für Mechanik- und Elektroingenieure » von A. G. Pattantyus, Technischer Verlag, Budapest, 1971, Band II, Seiten 149, 150, 157 und 181, beschrieben. Diese bekannten Lösungen können aber nur in kurzstreckigen Netzen verwendet werden, deren Gründe für jeden Fachman wohl bekannt sind.

Das erfindungsgemässe Verfahren ermöglicht auch für grosse Entfernungen den Nachrichtenverkehr mit üblichen Anlagen mit koaxialem Kabel in einer Nachrichtenübertragungskette mit symmetrischem Kabel durch Einsetzen solcher Ersatzarmaturen, bei denen der Kosten- und Bestandteilbedarf minimal ist.

Theoretisch ist das Verhalten der beiden Kabelarten — symmetrisch und koaxial — in den Fernleitungen ähnlich und der Verlauf ihrer Dämpfungscharakteristiken ist mit guter Annäherung identisch. Während aber bei koaxialen Kabeln der Verlauf der in Praxis messbaren Charakteristik mit der theoretischen übereinstimmt, so daß die Netze von der theoretischen Charakteristik ausgehend geplant werden können, weicht die tatsächliche Charakteristik der symmetrischen Kabel von der theoretischen auf einer mathematisch nicht formulierbaren Weise ab. Daher wurden bei den bekannten Lösungen die koaxialen Anlagen in dem mit symmetrischem Kabel ausgestalteten Netz derweise betrieben, daß je eine, die Linienstrecke P enthaltende Hauptkabelnetzstrecke ein Linienverstärker mit einem Kompensationsglied für das Hauptkabelnetz versehen worden ist, dessen Grunddämpfung hoch genug war, um die Anhebungen und Unterdrückungen zur Kompensation der Verzerrungen der Charakteristik der Hauptkabelnetzstrecke so einstellen zu können, daß das Vorzeichen der Dämpfung während der empirischen Korrektur in keinem Punkt verändert. Man pflegt die Anzahl der zu gemeinsam korrigierenden Linienstrecken in Abhängigkeit der Länge und der Eigenart der Linienstrecke zu wählen, die im allgemein P = 4, 5 oder 6 beträgt. Zu diesem Zwecke mußte aber der Aufbau der P-ten Linienverstärkungsstation, die das Kompensationsglied des Hauptkabelnetzes, den sogenannten « Hauptkompensator », enthielt, geändert bzw. ein modifizierter Linienverstärker verwendet werden.

Im Sinne der Erfindung werden in allen Linienstrecken Linienverstärker des gleichen Aufbaus verwendet, hingegen wird in den der das Kompensationsglied des Hauptkabelnetzes enthaltenden P-ten Verstärkungsstation vorangehenden 1 bis (P — 1)-ten Verstärkungsstationen eine Vorkompensation durchgeführt, bei der die Dämpfung der Pilotfrequenz mit der Dämpfung des Kompensationsgliedes des Hauptkabelnetzes übereinstimmt, wobei in dem Signalübertragungshand die Dämpfung niedriger ist, als die Dämpfung der entsprechenden Frequenz des Kompensationsgliedes des Hauptkabelnetzes ; auf diese Weise kommt ein Signal zum Eingang der das Kompensationsglied des Hauptkabelnetzes enthaltenden P-ten Linienstrecke an, das — auch neben Abweichungen, die sich in den tatsächlichen Frequenzcharakteristiken der vorangehenden Strecken zeigen, praktisch frequenzunabhängig — in dem Signalübertragungsband einen Pegelüberschuss enthält, und eben dieser Pegelüberschuss die Kompensation der Grunddämpfung des Kompensationsgliedes des Hauptkabelnetzes ermöglicht.

Demnach werden die koaxialen Anlagen erfindungsgemäss dem symmetrischen Ein- bzw. Ausgang des Übertragungsnetzes über einen Transformator angeschlossen und in der P-ten Linienstrecke der Hauptkabelnetzstrecke — die auch die P Linie enthält, P = z. B. 4, 5 oder 6, — die auch nach dem Stand der Technik verwendete Hauptkabelnetz-Korrekturkompensation durchgeführt, wobei aber in der 1... P — 1 Linienstrecken eine Vorkompensation vorgenommen wird.

Die Erfindung wird anhand der Zeichnung erläutert, wobei

Figur 1 das auf unser Problem reduzierte Schema einer traditionellen koaxialen Telekommunikationskette zeigt ;

Figur 2 schematisch die erfindungsgemässe Kette darstellt, bei der die übliche koaxiale Mehrkanalanlage in die Übertragungskette mit symmetrischem Kabel eingesetzt ist ; und

Figur 3 ein Beispiel für die Gliederung der Gratnetzstrecke zeigt.

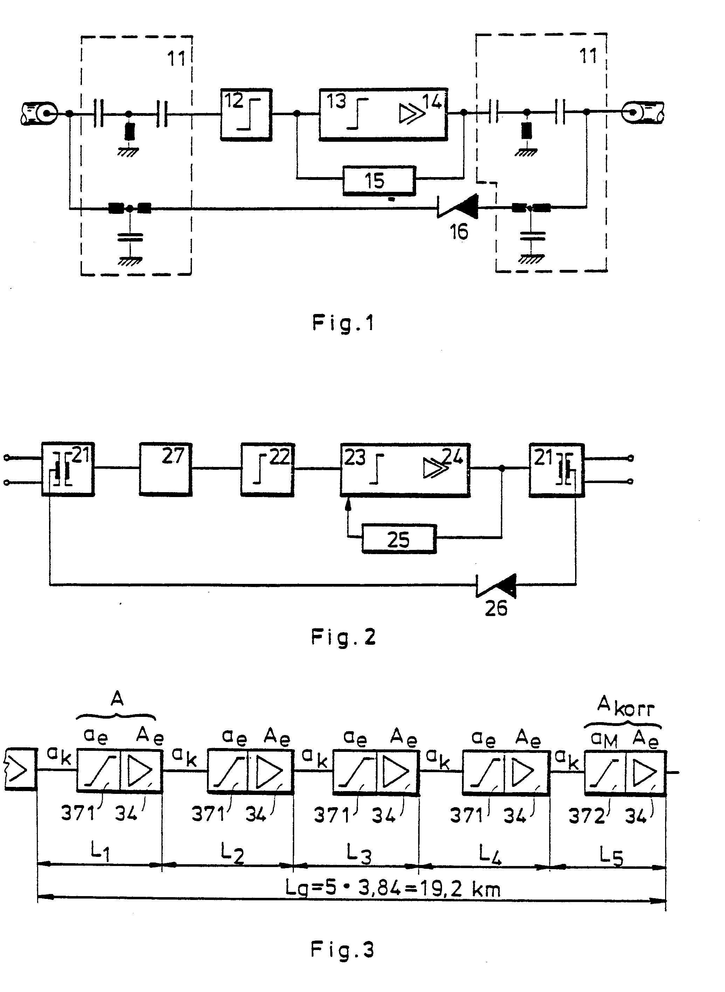

Wie es aus der Fig. 1 wohl ersichtlich ist, wird der Eingang der Speisestation der Linienstrecke bei einer Übertragung mit koaxialem Kabel durch einen Speisefilter 11 und der Ausgang durch einen

2

weiteren Speisefilter 11 gebildet, während die Kette zwischen dem Eingang und dem Ausgang ein Kabelkompensationsglied 12, einen Regelstromkreis 13, einen Linienverstärker 14 und einen Pilotempfänger 15 enthält. Das Kabelkompensationsglied 12 weist eine feste Dämpfung auf. Bei unserem Beispiel wird die Speisespannung mit einer Zenerdiode 16 stabilisiert.

Wenn nun dieses Übertragungsnetz mit einem symmetrischen Kabel ausgestaltet ist (Fig. 2), bilden Transformatoren 21 den Eingang bzw. Ausgang der Linienverstärkungsstation, die in einer unveränderten Ausführung ein Kabelkompensationsgleid 22, einen Regelstromkreis 23, einen Linienverstärker 24, einen Pilotempfänger 25 und eine Zenerdiode 26 enthält, es wird aber in der letzten P-ten Strecke des Hauptkabelnetzes eine Zusatzvorkompensation vorgenommen. In der Hauptkabelnetzstrecke mit einem symmetrischen Kabel — falls eine koaxiale Anlage in Betrieb war — hatte man auch bisher eine Korrekturkompensation verwendet ; zu diesem Zwecke wurde in die P-ten Verstärkungsstation eine spezielle Haupteinheit eingesetzt. Dementsprechend mußte man für eine Mehrverstärkung sorgen, die aber nur in einer Nachrichtenübertragungskette von geringerer Entfernung die richtige Anpassung ermöglicht hatte. Das Einsetzen resultierte in eine individuelle und komplizierte Gestaltung.

Im Sinne der Erfindung sind die Verstärkungsstationen in sämtlichen Strecken der Hauptkabelnetzstrecke praktisch einheitlich aufgebaut, insofern sie im Sinne des Blockschemas nach Fig. 2 aufgebaut sind ; hier ist das Zusatzvorkompensationsglied 27 ein in der P-ten Linienstrecke angeordnetes Gratnetz-Kompensationsglied mit individuell einstellbarer Dämpfung, während das Zusatzvorkompensationsglied 27 in den Linienstrecken 1 bis (P — 1) ein solches Vorkompensationsglied bedeutet, dessen Charakteristik in allen (P — 1) Strecken übereinstimmend ist.

Durch geeignete Dimensionierung kann es erreicht werden, daß am Eingang der P-ten Verstärkungsstation ein Pegelüberschuss — von vorbestimmtem Wert und in dem Signalübertragungsband praktisch frequenzunabhängig — erscheint, das von dem Kompensationsglied des Hauptkabelnetzes in dem erforderlichen Mass reduziert wird.

In der erfindungsgemässen Übertragungskette sind alle Linienverstärker in der an sich bekannten Weise und übereinstimmend ausgestaltet und das als Ausgleich des Hauptkabelnetzes verwendete Zusatzvorkompensationsglied 27 so eingestellt, daß die Grunddämpfung im gesamten Signalübertragungsband einen Wert von einigen dB aufweist, wodurch die jeweilige erforderliche Frequenzanhebung bzw. Frequenzunterdrückung ohne die Änderung des Vorzeichens der Dämpfung realisiert werden kann. Die richtige resultierende Übertragungscharakteristik gestaltet sich so, daß neben den derart verwendeten Linienverstärkern und dem Kompensationsglied des Hauptkabelnetzes in den 1 bis (P — 1)-ten Linienstrecken ein Zusatzvorkompensationsglied 27 als ein Vorkompensationsglied verwendet wird, dessen Dämpfung bei der Pilotfrequenz den gleichen Wert aufweist, wie der Wert der in der P-ten Linienstrecke durchgeführten Korrekturdämpfung, während die Dämpfung im Signalübertragungsband kleiner als die Korrekturdämpfung ist.

Im allgemeinen kann festgestellt werden, daß in einer derweise aufgebauten Übertragungskette die Forderungen dann optimal erfüllt werden können, wenn folgende Bedingung bei allen Betriebsfrequenzen erfüllt ist : $P \cdot a_k + (P - 1) \cdot a_e + a_M = P \cdot A_e$, wobei $a_k$ die Kabeldämpfung der Linienstrecke ; $a_e$ die Dämpfung des Vorkompensationsgliedes ; $a_M$ die Dämpfung des Kompensationsgliedes des Hauptkabelnetzes und $A_e$ die Verstärkung der Linienverstärker je Linienstrecke bezeichnen.

Aus dieser Bedingung erhält man nach erfolgter Umordnung die Dimensionierungsformel der Vorkompensationsglieder :

$$a_e = P/(P - 1) \cdot (A_e - a_k) - [a_M/(P - 1)].$$

Wir sind davon ausgegangen, daß die Koaxialanlage ohne Änderungen verwendet werden soll, und so war keinerlei Änderung bei dem Pilotempfänger beabsichtigt. Das gesetzte Ziel kann erst dann erreicht werden, wenn die Dimensionierung so durchgeführt wird, daß bei der Pilotfrequenz die Verstärkung der Linienverstärker und die resultierende Dämpfung des Kabelabschnittes übereinstimmen, d. h. bei dieser Frequenz die Dämpfungen des Kompensationsgliedes des Hauptkabelnetzes und der Vorkompensationsglieder, — innerhalb der Fertigungstoleranz — übereinstimmende Werte aufweisen, d. h. bei der Pilotfrequenz $a_e = A_e - a_k$ ; $a_M = a_c = $ konstant ; desweiteren auch die Verstärkung der ferngespeisten Stationen bei dieser Frequenz übereinstimmend ist : $A = A_e - a_e = A_{korr} = A_e - a_M$.

Bei der in Fig. 3 dargestellten Strecke des Hauptkabelnetzes sind P = 5 die Länge einer Linienstrecke : $L_i$ (i = 1, bis 5) = 3,84 km, also beträgt die Gesamtlänge der aus fünf Linienstrecken bestehenden Gratnetzstrecke : $L_g = 5 \cdot 3,84 = 19,2$ km. Das in der Fig. 2 dargestellte akzessorische Zusatzvorkompensationsglied 27 ist bei den (P — 1)-ten Linienstrecken das Vorkompensationsglied 371, bei der P-ten Linienstrecke das Hauptkabelnetz-Kompensationsglied 372, wobei an allen Linienstrecken ein gleicherweise ausgestalteter Linienverstärker 34 verwendet wird.

Die die funktionellen Mengen symbolisierenden Referenzzeichen werden im in der Fig. 3 bereits angegebenen Sinne verwendet.

Die der Verstärkungsverhältnisse enthaltende Tabelle gibt Orientierungswerte an, doch selbstverständlich können die Werte sich aufgrund der bei einer Probestrecke gewonnenen Ergebnisse ändern.

Tabelle

| $f$/MHz | 0,308 | 0,5 | 1 | 1,4 | 2 | 2,4 |
|---|---|---|---|---|---|---|
| $a_k$/dB | 10,26 | 13,08 | 18,78 | 22,26 | 26,82 | 29,40 |
| $A_e$/dB | 11,69 | 14,80 | 21,03 | 24,94 | 29,78 | 32,59 |
| $a_e$/dB * | 0,97 | 1,31 | 2,04 | 2,49 | 2,92 | 3,15 |
| $A$/dB | 10,72 | 13,49 | 18,99 | 22,45 | 26,86 | 29,44 |
| $A_{korr}$/dB | 8,43 | 11,54 | 17,77 | 21,68 | 26,52 | 29,33 |

(*) Bei der Berechnung der Dämpfung des Vorkompensationsgliedes haben wir die — vermutlich aus Messfehlern resultierenden — Ungleichmässigkeiten der Kabeldämpfung korrigiert.

| $f$/MHz | 3 | 3,4 | 4 | 4,287 | 4,4 |
|---|---|---|---|---|---|
| $a_k$/dB | 33,18 | 35,40 | 38,64 | 40,22 | 40,80 |
| $A_e$/dB | 36,40 | 38,74 | 42,00 | 43,48 | 44,05 |
| $a_e$/dB * | 3,37 | 3,43 | 3,37 | 3,26 | 3,21 |
| $A$/dB | 33,03 | 35,31 | 38,63 | 40,22 | 40,84 |
| $A_{korr}$/dB | 33,14 | 35,48 | 38,74 | 40,22 | 40,79 |

(*) Bei der Berechnung der Dämpfung des Vorkompensationsgliedes haben wir die — vermutlich aus Messfehlern resultierenden — Ungleichmässigkeiten der Kabeldämpfung korrigiert.

**Patentansprüche**

1. Verfahren zur Inbetriebhaltung koaxialer Mehrkanalanlagen über ein mit symmetrischem Kabel ausgestaltetes, ferngespeistes Übertragungsnetz, in dem je Linienstrecke je eine Verstärkungsstation angeordnet ist und in jeder P-ten Linienstrecke — wobei P eine von der Länge und den Übertragungseigenschaften der Linienstrecken abhängig gewählte Zahl ist, vorteilhaft P = 4, 5 oder 6 — die in der auch die P Linienstrecken enthaltenden Hauptkabelnetzstrecke mit Hilfe einer durch festwertige Kabelkompensationen realisierten Kompensation korrigiert wird, wobei die Signalverstärkung in den einzelnen Linienstrecken mit Pilotsignalen, deren Frequenz vorteilhaft höher ist als jene des Signalfrequenzbandes, gesteuert wird und wobei die koaxialen Anlagen über Transformatoren verbunden werden, dadurch gekennzeichnet, daß in den zu der Hauptkabelnetzstrecke gehörenden Linienstrecken 1 bis P — 1 eine Vorkompensation durchgeführt wird, bei der die Dämpfung bei der Pilotfrequenz dem Wert der in der P-ten Linienstrecke vorgenommenen Korrekturdämpfung entspricht, während sie bei dem Signalübertragungsband geringer ist als die Korrekturdämpfung in der P-ten Linienstrecke.

2. Verfahren nach Anspruch 1, dadurch gekennzeichnet, daß die Dämpfung des Kompensationsgliedes des Hauptkabelnetzes und der 1 bis (P — 1)-ten Vorkompensationsglieder gleicher Charakteristik so eingestellt werden, daß bei jeder Betriebsfrequenz die folgende Bedingung erfüllt ist :

$$P \cdot a_k + (P — 1) \cdot a_e + a_M = P \cdot A_e,$$

wobei
$a_k$ die Kabeldämpfung der Linienstrecke,
$a_e$ die Dämpfung des Vorkompensationsgliedes,
$a_M$ die Dämpfung des Kompensationsgliedes des Hauptkabelnetzes und
$A_e$ die Verstärkung des Linienverstärkers je Linienstrecke bezeichnen.

3. Verfahren nach Anspruch 2, dadurch gekennzeichnet, daß die Dämpfungen so eingestellt werden, daß bei der Pilotfrequenz die folgende Bedingung erfüllt ist :

$$a_e + A_e = a_M + A_e ;$$

**0 118 522**

d. h. $a_e = a_M$.

4. Mehrkanalige Übertragungskette für die Nachrichtenübertragung mit koaxialen Telekommunikationsanlagen und einem ferngespeisten Übertragungsnetz, welches in mindestens einer aus P Linienstrecken, wobei P vorteilhaft 4, 5 oder 6 ist, bestehenden Strecke des Hauptkabelnetzes mit symmetrischem Kabel ausgestaltet und mit einer Verstärkungsstation je Linienstrecke versehen ist, wobei die Station in Kette geschaltete Einheiten, wie ein Kabelkompensationsglied (22), einen Regelstromkreis (23) und Linienverstärker (24), und einen mit der Kette verbundenen Pilotempfänger (25) enthält, wobei in der Verstärkungsstation jeder P-ten Linienstrecke in die Kette auch ein Hauptkabelnetz-Kompensationsglied (372) eingesetzt ist und wobei die Eingangs- und Ausgangsstufen der koaxialen Anlagen Transformatoren (21) sind, dadurch gekennzeichnet, daß zwischen dem Eingangstransformator (21) und dem Kabelkompensationsglied (22) in der Kette ein Zusatzvorkompensationsglied (27) eingesetzt ist, das bei den Linienstrecken 1 bis P — 1 ein übereinstimmend ausgestaltetes Vorkompensationsglied (371) mit fester Dämpfung ist und in der P-ten Strecke ein in an sich bekannter Weise ausgestaltetes Hauptkabelnetz-Kompensationsglied (372) mit individuell einstellbarer Charakteristik ist.

5. Übertragungskette nach Anspruch 4, dadurch gekennzeichnet, daß zwischen der Dämpfung des Kompensationsgliedes des Hauptkabelnetzes und der der Zusatzvorkompensationsglieder (27) bei jeder Betriebsfrequenz die folgende Beziehung erfüllt ist :

$$P \cdot a_k + (P - 1) \cdot a_e + a_M = P \cdot A_e,$$

wobei

$a_k$ die Dämpfung der Linienstrecke,
$a_e$ die Dämpfung des Vorkompensationsgliedes (371),
$a_M$ die Dämpfung des Hauptkabelnetz-Kompensationsgliedes (372) und
$A_e$ die Verstärkung eines Verstärkers (34) je Linienstrecke bezeichnen.

6. Nachrichtenübertragungskette nach Anspruch 5, dadurch gekennzeichnet, daß die Dämpfungen ($a_e$, $a_M$) der Vorkompensationsglieder (371) und des Hauptkabelnetz-Kompensationsgliedes (372) bei der Pilotfrequenz — innerhalb der Fertigungstoleranz — gleich sind.

## Claims

1. Method for maintaining in service coaxial multichannel installations by a remotely supplied transmission network comprised of symmetric cables, wherein an amplification station is arranged for each line section and in which in every $P^{th}$ line section — wherein P is an integer selected as a function of the length and of the characteristics of the line transmission and is preferably equal to 4, 5 or 6 — the principal network section embracing also the P line sections is corrected by means of a compensation effected by constant wiring compensation, the signal amplification in each line section being controlled by pilot signals, the frequency of which is appropriately higher than that of the signal frequency range, and the coaxial installations being connected via transformers, characterised in that a precompensation is carried out on the $1^{st}$ to $(P - 1)^{th}$ line sections pertaining to the principal network section, whereas the attenuation for the pilot frequency corresponds to the correction attenuation value obtained in the $P^{th}$ line section, whereas in the signal transmission range it is lower than the correction attenuation.

2. Method according to claim 1, characterised in that the attenuations of the compensation element of the principal network section and the $1^{st}$ to $(P - 1)^{th}$ precompensation element of same characteristics are adapted in such a way, that the following condition is given for all operational frequencies :

$$P \cdot a_k + (P - 1) \cdot a_e + a_M = P \cdot A_e,$$

where

$a_k$ denotes the network attenuation of the line section,
$a_e$ denotes the attenuation of the precompensation element,
$a_M$ denotes the attenuation of the compensation element of the principal network section, and
$A_e$ denotes the amplification of the line amplifier per line section.

3. Method according to claim 2, characterised in that the attenuations are adapted in a way that the pilot frequency fulfills the following condition :

$$a_e + A_e = a_M + A_e ;$$

i. e. $a_e = a_M$.

4. Multichannel transmission chain for data transmission with coaxial telecommunication installations and with a remotely supplied transmission network, formed with symmetrical cables in at least one section of the principal network section, said section being comprised of P line sections and with an

5

amplification state per line section, wherein P is preferably equal to 4, 5 or 6, and comprising an amplification station per line section, wherein the station comprises chain-connected units such as a wiring compensation element (22), an adjusting circuit (23) and a line amplifier (24) and a pilot signal receiver connected to the chain, where in the amplification station of each $P^{th}$ line section there is also inserted in the chain a principal network compensation element (372), and where the input and output stages of the coaxial installations are transformers, characterised in that between the input transformer (21) and the wiring compensation element (22) there is inserted in the chain an accessary precompensation element (27) which is an identically developed precompensation element (371) in the $1^{st}$ to $(P — 1)^{th}$ line sections, and which is an ordinary developed principal network compensation element (372) having individually adjustable characteristics.

5. Transmission chain according to claim 4, characterised in that the attenuation of the compensation element of the principal network section and the attenuation of the accessory precompensation elements (27), the following condition is fulfilled for every operational frequency :

$$P \cdot a_k + (P — 1) \cdot a_e + a_M = P \cdot A_e,$$

where

$a_k$ is the attenuation of the line sections,
$a_e$ is the attenuation of the precompensation element (371),
$a_M$ is the attenuation of the compensation element of the principal network section (372), and
$A_e$ is the amplification of the amplifier (34) per line section.

6. Transmission chain for data transmission according to claim 5, characterised in that the attenuations ($a_e$, $a_M$) of the precompensation elements (371) and of the compensation elements of the principal network section (372) are equal at the pilot frequency, within the manufactoral limits.

## Revendications

1. Procédé pour maintenir en service des installations coaxiales multicanaux via un réseau de transmission télé-alimenté et à câble symétrique dans lequel il est prévu une station d'amplification pour chaque section de ligne et dans chaque $P_{ième}$ section de ligne — P étant un chiffre choisi en fonction de la longueur et des propriétés de transmission des sections de ligne, avantageusement P = 4, 5 ou 6 — la section de ligne est corrigée, dans la section de réseau de câble principal contenant également les P sections de lignes, à l'aide d'une compensation réalisée par des compensations de câble de valeur fixe, l'amplification du signal étant commandée dans les sections de lignes distinctes par des signaux pilotes dont la fréquence est avantageusement supérieure à celle de chaque bonde de fréquence de signal, et dans lequel les installations coaxiales sont reliées par des transformateurs, caractérisé en ce que l'on réalise dans les sections de ligne 1 à P — 1 appartenant à la section de réseau de câble principal, une compensation préalable, pour laquelle l'atténuation à la fréquence pilote correspond à la valeur de l'atténuation de correction prévue dans la $P_{ième}$ section de ligne, tout en étant plus faible pour la bande de transmission de signal, que l'atténuation de correction dans la $P_{ième}$ section de ligne.

2. Procédé selon la revendication 1, caractérisé en ce que l'atténuation de l'organe de compensation du réseau de câble principal et celle des organes de compensation préalable 1 à P — 1 de même caractéristique sont réglées de telle façon que pour chaque fréquence de service la relation suivante soit satisfaite :

$$P \cdot a_k + (P — 1) \cdot a_e + a_M = P \cdot A_e$$

où :

$a_k$ désigne l'atténuation du câble de la section de ligne ;
$a_e$ désigne l'atténuation de l'organe de compensation préalable ;
$a_M$ désigne l'atténuation de l'organe de compensation du réseau de câble principal ; et
$A_e$ désigne l'amplification de l'amplificateur de ligne de chaque section de ligne.

3. Procédé selon la revendication 2, caractérisé en ce que les atténuations sont réglées de telle façon que, pour la fréquence pilote, la relation suivante soit satisfaite :

$$a_e + A_e = a_M + A_e$$

c'est-à-dire $a_e = a_M$.

4. Chaîne de transmission multicanaux pour la transmission d'informations, comportant des installations coaxiales de télécommunication et un réseau de transmission télé-alimenté, qui est réalisé en au moins une section du réseau de câble principal à câble symétrique, se composant de P sections de lignes, où P est avantageusement égal à 4, 5 ou 6, et est muni d'une station d'amplification par section de ligne, la station contenant des unités couplées pour constituer une chaîne, telles qu'un organe de compensation de câble (22), un circuit de courant de réglage (23) et un amplificateur de ligne (24) et un récepteur pilote (25) relié à la chaîne, un organe de compensation (372) de réseau de câble principal étant également inséré dans la chaîne à la station d'amplification de chaque $P_{ieme}$ section de ligne et dans laquelle les étages d'entrée et de sortie des installations coaxiales sont des transformateurs (21), caractérisée en ce qu'un organe de compensation supplémentaire (27) est inséré dans la chaîne entre le transformateur d'entrée (21) et l'organe de compensation de câble (22), en ce que dans les sections de ligne 1 à P — 1 un organe de compensation préalable (371) agencé de façon correspondante présente un amortissement fixe et en ce que dans la $P_{ieme}$ section un organe de compensation (372) de réseau de câble principal, agencé de manière connue en soi, présente une caractéristique réglable de façon individuelle.

5. Chaîne de transmission selon la revendication 4, caractérisée en ce qu'entre l'atténuation de l'organe de compensation du réseau de câble principal et celle de l'organe de compensation préalable supplémentaire (27), la relation suivante est satisfaite pour chaque fréquence de service :

$$P \cdot a_k + (P - 1) \cdot a_e + a_M = P \cdot A_e$$

où :

$a_k$ désigne l'atténuation de la section de ligne ;

$a_e$ désigne l'atténuation de l'organe de compensation préalable (371) ;

$a_M$ désigne l'atténuation de l'organe de compensation (372) du réseau de câble principal ; et

$A_e$ désigne l'amplification d'un amplificateur (34) de chaque section de ligne.

6. Chaîne de transmission d'informations selon la revendication 5, caractérisée en ce que les atténuations ($a_e$, $a_M$) de l'organe de compensation préalable (371) et de l'organe de compensation (372) du réseau de câble principal sont identiques — dans les limites de la tolérance de fabrication — pour la fréquence pilote.

Fig. 1

Fig. 2

Fig. 3